Europäisches Patentamt

European Patent Office

Office européen des brevets

(11) Veröffentlichungsnummer: **0 501 138 A1**

## (12) EUROPÄISCHE PATENTANMELDUNG

(21) Anmeldenummer: **92101046.8**

(22) Anmeldetag: **23.01.92**

(51) Int. Cl.5: **B01D 46/10**, B01D 46/24, F01N 3/02

(30) Priorität: **28.02.91 DE 4106303**

(43) Veröffentlichungstag der Anmeldung:
**02.09.92 Patentblatt 92/36**

(84) Benannte Vertragsstaaten:
**CH DE GB LI**

(71) Anmelder: **Drache Keramikfilter Produkfions-GmbH Werner-von-Siemens-Strasse 9 W-6252 Diez(DE)**

(72) Erfinder: **Drache, Frank, Dipl.-Betriebswirt Bahnhofstrasse 2 W-6252 Diez(DE)**

(74) Vertreter: **Blumbach Weser Bergen Kramer Zwirner Hoffmann Patentanwälte Sonnenberger Strasse 100 W-6200 Wiesbaden 1(DE)**

(54) **Hochtemperatur-Gasfilter, insbesondere Dieselrussfilter.**

(57) Es wird ein Hochtemperatur-Gasfilter, insbesondere Dieselrußfilter mit oder ohne Katalysatorwirkung beschrieben, das als Filtermaterial einen Schaumkeramikkörper (1) besitzt, der in einem temperaturfesten Gehäuse (10) mit einem Einlaß (12) und einem Auslaß (13) angeordnet ist. Der Schaumkeramikkörper (1) weist in Durchströmungsrichtung verlaufende Kanäle (2) auf, die rechteckigen oder quadratischen Querschnitt besitzen. Vorzugsweise besteht das Filter aus Siliziumkarbid.

Fig. 1

Rank Xerox (UK) Business Services

EP 0 501 138 A1

Die Erfindung betrifft ein Hochtemperatur-Gasfilter nach dem Oberbegriff des Anspruchs 1.

Das Filtern von Gasen hoher Temperatur zur Ausscheidung von festen Partikeln spielt insbesondere auch bei Dieselrußfiltern eine wichtige Rolle, um unerwünschte Emissionen von Rußpartikeln im Abgas von Dieselmotoren bei Kraftfahrzeugen und auch stationären Motoren zu beseitigen. Dabei ist es nicht nur wichtig, die Partikel möglichst weitgehend auszufiltern, sondern die verwendeten Filter müssen auch eine ausreichend hohe Standzeit und Lebensdauer haben. Das bedeutet, daß Dieselrußfilter in regelmäßigen Abständen von dem angesammelten Filterkuchen durch Abbrennen befreit werden müssen. Die dabei auftretenden hohen Temperaturen stellen hohe Anforderungen an das verwendete Filtermaterial.

In bekannter Weise verwendet man zur Hochtemperatur-Filterung insbesondere auch der Abgase von Dieselmotoren und von Gasturbinen wabenartige Körper aus Cordierit, die im Stranggußverfahren mit anschließendem Brennen hergestellt werden. Bekannt ist auch die Verwendung von Keramikschaum ebenfalls aus Cordierit zum Filtrieren solcher Abgase. Dazu wird hingewiesen auf einen Aufsatz "Open-Pore Ceramic Foam as Diesel Particulate Filter" von T. Mizrah et al, SAE Technica Paper Series, SP-775, International Congress and Exposition, Detroit, Michigan, February 27 - March 3, 1989.

Die bekannten Filter zeigen Schwierigkeiten hinsichtlich ihrer mechanischen und thermischen Stabilität insbesondere beim Auftreten höherer Temperaturen in Verbindung mit dem Abbrennen der angesammelten Partikel, also insbesondere Ruß bei Dieselrußfiltern.

Der Erfindung liegt demgemäß die Aufgabe zugrunde, Hochtemperatur-Gasfilter und insbesondere Dieselrußfilter zu schaffen, die einen hohen Filterwirkungsgrad haben und aufgrund mechanischer und thermischer Stabilität lange Standzeit und Lebensdauer besitzen. Die Lösung der Aufgabe ist im Patentanspruch 1 gekennzeichnet.

Durch die Kanäle mit rechteckigem oder quadratischem Querschnitt kann erreicht werden, daß die Filtrierquerschnitte zwischen den Kanälen über den gesamten Körper etwa gleich sind, so daß insgesamt ein gleichmäßiges und hohes Aufnahmevermögen sichergestellt ist. Wenn dann außerdem zur Herstellung des Keramikkörpers ein sehr festes und temperaturstabiles Material verwendet wird, beispielsweise in Weiterbildung der Erfindung Siliziumkarbid, so entsteht ein sehr widerstandsfähiges und standfestes Filter. Dabei ist es wichtig, daß es sich um einen Schaumkeramikkörper handelt, der in bekannter Weise unter Verwendung von Kunststoffschaum durch Tränken mit keramischem Schlicker, Auspressen, Trocknen und Brennen erzeugt wird. Eine Herstellung im Strangguß-Extrusionsverfahren ist bei Verwendung von sehr hartem Keramikmaterials, beispielsweise Siliziumkarbid, nicht möglich. Die Erzeugung der Kanäle mit rechteckigem oder quadratischem Querschnitt kann durch Stanzen des als Ausgangsmaterial verwendeten Kunststoffschaums oder auch durch Schneiden mit einem Hochdruck-Wasserstrahl erfolgen.

Weiterbildungen der Erfindung sind Gegenstand der Unteransprüche. So kann vorgesehen sein, daß der Keramikschaumkörper auslaßseitig durch einen feinporigen Endplattenbereich aus Keramikschaum abgedeckt ist. Das zu Filtrierende Hochtemperaturgas kann dann nicht direkt am Eingang der Kanäle zum Ausgang gelangen, sondern muß durch den Endplattenbereich und auch die Wände zwischen den Kanälen strömen. Dieses Durchströmungsverhalten läßt sich noch verbessern, wenn der Endplattenbereich Öffnungen besitzt, die fluchtend mit ausgewählten Kanälen angeordnet sind und gleichen Querschnitt wie die Kanäle besitzen. Die ausgewählten Kanäle können dabei jeweils zwischen Kanälen liegen, die durch den Keramikschaum abgedeckt sind, so daß sich durchgängige und abgedeckte Kanäle abwechseln. Mit Vorteil kann außerdem der Keramikschaumkörper auch einlaßseitig einen Eingangsplattenbereich aus Schaumkeramik besitzen, der wiederum mit Öffnungen versehen ist. Diese Öffnungen fluchten mit Kanälen, welche jeweils durch den Keramikschaum des Endplattenbereiches abgedeckt sind. Der Endplattenbereich und auch der Eingangsplattenbereich können einstückig mit dem Keramikkörper oder auch in Form einer getrennten Platte verwirklicht sein.

In Weiterbildung der Erfindung werden die Kanäle mit Vorteil in sich rechtwinklig schneidenden Zeilen und Spalten mit gleichen Abständen angeordnet. Dadurch wird erreicht, daß die Wanddicken zwischen benachbarten Kanälen in Zeilen- und/oder Spaltenrichtung gleich sind und dadurch das Filtermaterial überall gleichen Strömungswiderstand und gleiches Partikel-Rückhaltevermögen besitzt.

Der Keramikschaumkörper kann einstückig oder auch zweckmäßig aus zwei oder mehreren Scheiben bestehen, die gleiche oder auch unterschiedliche Porengröße besitzen. Beispielsweise kann die Eingangsscheibe verhältnismäßig grobporig sein, so daß beim Eintritt der Gase schon die gröberen Partikel zurückgehalten werden. Die letzte Scheibe ist dann sehr feinporig, so daß auch feinste Partikel ausfiltriert werden können.

Ein besonderer Vorteil bei der Verwendung solcher Scheiben ergibt sich dadurch, daß die Anbringung der Kanäle gegenüber einem langen, einstückigen Körper vereinfacht wird. Verhältnismäßig dünne Scheiben aus Kunststoffschaum lassen sich nämlich sowohl durch Ausstanzen als auch durch Schneiden mit einem Hochdruck-Wasserstrahl leichter und genauer mit rechteckigen oder quadratischen Durchgängen versehen.

Die Kanäle oder Durchgänge der Scheiben können miteinander fluchten, so daß insgesamt die Kanäle des Keramikschaumkörpers entstehen. Es kann aber in Weiterbildung der Erfindung auch vorgesehen sein, daß wenigstens eine Scheibe so gegenüber der oder den anderen Scheiben verdreht oder versetzt ist, daß die Kanäle der Scheiben nicht miteinander fluchten. Das zu filterierende Hochtemperaturgas muß dann jeweils immer durch Teile des Keramikkörpers strömen, so daß insgesamt das Filtermaterial gleichmäßig und gut ausgenutzt wird.

Als Material für die Schaumkeramik kommen insbesondere harte und temperaturfeste Keramiken in Frage, beispielsweise Zirkonoxid ($ZrO_2$), Mullit (Magnesiumaluminiumsilikat), Aluminiumoxid ($Al_2O_3$). Besonders vorteilhaft ist wegen seiner Härte und hohen Temperaturfestigkeit aber Siliziumkarbid (SiC).

Die äußere Form des Keramikkörpers und damit auch des Gehäuses läßt sich abhängig vom Einsatzzweck wählen. Üblich sind kreisförmige Querschnitte. Es kommen aber auch eckige oder ovale Querschnitte in Frage. Die Länge des Keramikschaumkörpers kann zwischen 20 und 200 mm bei einem Durchmesser bis zu 40 cm und mehr betragen.

Nachfolgend werden Ausführungsbeispiele der Erfindung in Verbindung mit der Zeichnung beschrieben. Es zeigen:

Fig. 1 schematisch einen Längsschnitt durch ein Dieselrußfilter nach der Erfindung;

Fig. 2 eine Schnittansicht des Filters nach Fig. 1 entlang der Schnittlinie II-II bei weggelassenem Gehäuse;

Fig. 3 einen Längsschnitt einer weiteren Filterausführung bei weggelassenem Gehäuse;

Fig. 4 die Aufsicht des Filters nach Fig. 3;

Fig. 5 die Bodenansicht des Filters nach Fig. 3;

Fig. 6 einen Längsschnitt eines dritten Ausführungsbeispiels der Erfindung.

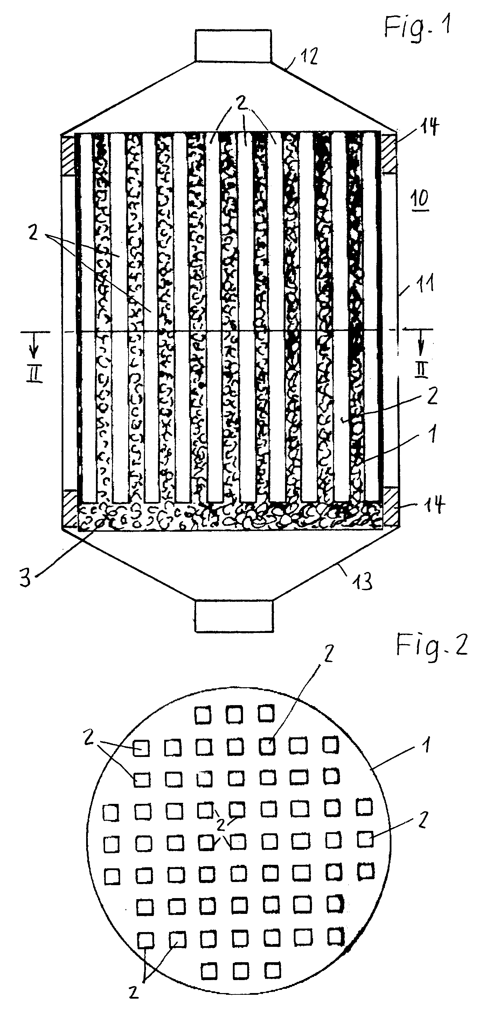

Das Dieselrußfilter nach Fig. 1 und 2 weist ein nur schematisch dargestelltes Gehäuse 10 aus Stahlblech, gegebenenfalls auch rostfreiem Stahlblech auf. Dabei schließen sich an einen zylindrischen Abschnitt 11 ein konischer Eingangsabschnitt 12 und ein ebenfalls konischer Ausgangsabschnitt 13 an. Im zylindrischen Abschnitt 11 ist ein Keramikschaumkörper 1 angeordnet und mittels eines Dichtbandes 14 aus Blähton festgelegt.

Der Keramikkörper 1 weist in Längsrichtung des Filters zwischen dem Einlaß 12 und dem Auslaß 13 regelmäßig angeordnete Kanäle 2 auf. Auslaßseitig sind die Kanäle 2 durch eine Endplatte 3 abgedeckt, so daß das zu filtrierende Gas durch diesen Bereich strömen muß. Außerdem kann das Gas aber zwischen den Kanälen durch die trennenden Wandabschnitte hindurchtreten. Die Kanäle 2 sind, wie Fig. 2 zeigt, in Zeilen und Spalten angeordnet und besitzen sowohl in Zeilen- als auch in Spaltenrichtung jeweils gleiche Abstände, so daß die Wanddicken zwischen den Kanälen im wesentlichen gleich sind. Damit ist auch der Durchströmungswiderstand gleich.

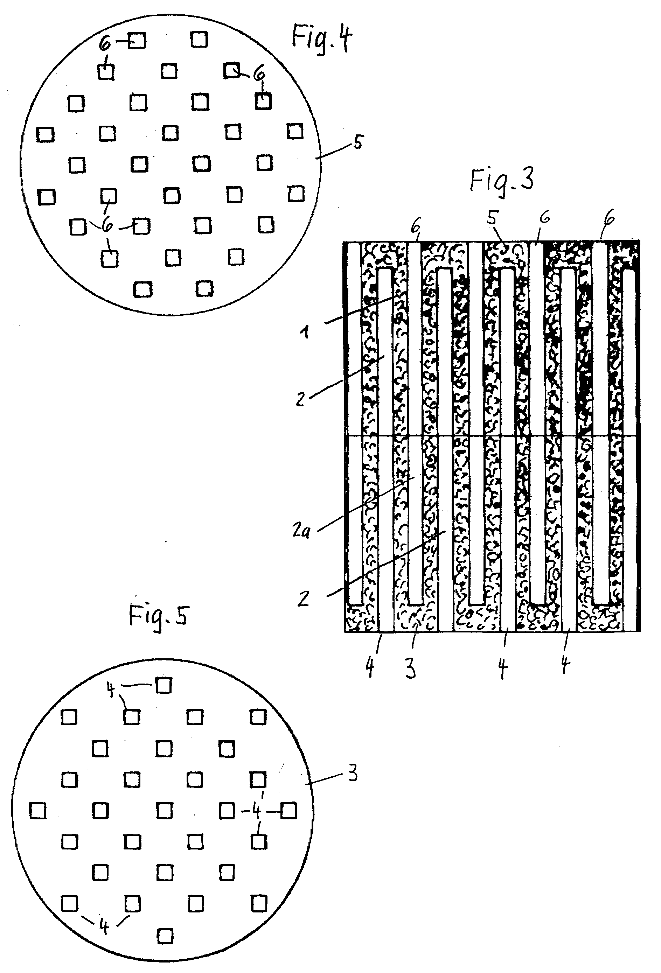

Bei dem Ausführungsbeispiel nach Fig. 3 bis 5 ist ein im wesentlichen ähnlicher Keramikkörper 1 verwendet worden, bei dem jedoch der Endplattenbereich 3 Öffnungen 4 besitzt, die jeweils mit abwechselnden Kanälen 2 fluchten, wie ein Vergleich der Figuren 5 und 2 zeigt. Man erkennt, daß zwischen den Öffnungen 4, die mit zugeordneten Kanälen 2a fluchten und gleichen Querschnitt haben, jeweils abgedeckte Kanäle 2 liegen. Das in diese Kanäle 2a durch Eingangsöffnungen 6 einströmende Gas muß daher zwangsläufig entweder durch den Endplattenbereich 3 oder die Wände zu den benachbarten Kanälen 2 mit Öffnungen 4 strömen.

Auch eingangsseitig weist der Keramikkörper 1 einen Eingangsplattenbereich 5 auf, der ähnlich wie der Endplattenbereich 3 jeweils abwechselnd fluchtende Öffnungen 6 für Kanäle 2a und abdeckende Bereiche für benachbarte Kanäle 2 besitzt. Dadurch wird das Gas gezwungen, auf der gesamten Länge der Kanäle 2a durch die Seitenwände zu benachbarten Kanälen 2 zu strömen.

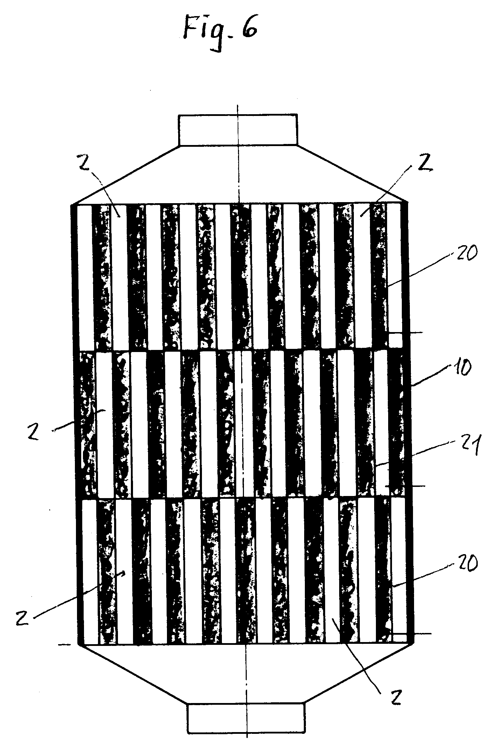

In Fig. 6 ist ein Ausführungsbeispiel gezeigt, bei dem im Gehäuse 10 drei Scheiben 20 bzw. 21 aus Keramikschaum in Durchströmrichtung hintereinander angeordnet sind. Die Scheiben 20, 21 weisen ähnlich wie bei den vorhergehenden Ausführungsbeispielen Kanäle 2 auf, die jeweils vollständig durch die einzelnen Scheiben 20, 21 verlaufen. Die mittlere Keramikscheibe 21 ist dabei so mit den Kanälen 2 versehen, daß insgesamt die Kanäle aller drei Scheiben nicht miteinander fluchten, also nicht vom Eingang zum Ausgang des Filters durchlaufen. Die Scheiben 20, 21 können entweder getrennt gefertigt und dann im Filtergehäuse 10 vereinigt werden, oder es werden die Scheiben in Form von Kunststoffschaum miteinander verbunden und dann gemeinsam in bekannter Weise keramisiert.

Die Querschnittsabmessungen der Kanäle können beispielsweise 6 mm x 6 mm betragen.

**Patentansprüche**

1.   Hochtemperatur-Gasfilter, insbesondere Dieselrußfilter, mit oder ohne Katalysatorwirkung mit einem Schaumkeramikkörper als Filtermaterial und einem temperaturfesten Gehäuse, das einen Einlaß und einen Auslaß besitzt,

**dadurch gekennzeichnet,** daß
der Schaumkeramikkörper (1) in Durchströmrichtung verlaufende Kanäle (2) mit rechteckigem oder quadratischem Querschnitt aufweist.

2. Filter nach Anspruch 1,
dadurch gekennzeichnet, daß der Keramik-schaumkörper (1) auslaßseitig einen feinpori-gen Endplattenbereich aus Keramikschaum aufweist.

3. Filter nach Anspruch 2,
dadurch gekennzeichnet, daß der Endplattenbereich (3) mit Öffnungen (4) versehen ist, die fluchtend mit ausgewählten Kanälen (2) im Keramikschaumkörper (1) angeordnet sind und gleichen Querschnitt wie die Kanäle (2) besitzen.

4. Filter nach einem der Ansprüche 1 bis 3,
dadurch gekennzeichnet, daß die ausgewählten Kanäle (2) jeweils zwischen Kanälen (2a) liegen, die durch den Keramikschaum des Endplattenbereiches (3) abgedeckt sind.

5. Filter nach Anspruch 4,
dadurch gekennzeichnet, daß der Keramikschaumkörper (1) auch einlaßseitig einen Eingangsplattenbereich (5) aus Schaumkeramik aufweist, daß der Eingangsplattenbereich mit Öffnungen (6) versehen ist, die mit Kanälen (2a) fluchten, welche durch den Keramik-schaum des Endplattenbereiches (3) abge-deckt sind, und daß die Öffnungen (6) des Eingangsplattenbereiches (5) gleichen Querschnitt wie die Kanäle (2, 2a) haben.

6. Filter nach einem der Ansprüche 2 bis 5,
dadurch gekennzeichnet, daß der Endplattenbereich (3) und/oder der Eingangsplattenbereich (5) durch eine getrennte Platte gebildet werden.

7. Filter nach einem der Ansprüche 1 bis 6,
dadurch gekennzeichnet, daß die Kanäle (2, 2a) in sich rechtwinklig schneidenden Zeilen und Spalten in gleichen Abständen angeordnet sind, derart, daß die Wanddicken zwischen benachbarten Kanälen in Zeilen- und/oder Spaltenrichtung gleich sind.

8. Filter nach einem der Ansprüche 1 bis 7,
dadurch gekennzeichnet, daß der Keramikschaumkörper (1) aus zwei oder mehreren Scheiben (20, 21) gleicher oder unterschiedlicher Porengröße zusammengesetzt ist.

9. Filter nach Anspruch 8,

dadurch gekennzeichnet, daß die Kanäle (2, 2a) der Scheiben miteinander fluchten.

10. Filter nach Anspruch 8,
dadurch gekennzeichnet, daß wenigstens eine Scheibe (21) so gegenüber der oder den anderen Scheiben (20) verdreht oder versetzt ist, daß die Kanäle der Scheiben nicht miteinander fluchten.

11. Filter nach einem der Ansprüche 1 bis 10,
dadurch gekennzeichnet, daß die Schaumkeramik aus Siliziumkarbid (SiC) besteht.

12. Verfahren zur Herstellung eines Filters nach einem der Ansprüche 8 bis 11,
dadurch gekennzeichnet, daß den Scheiben aus Keramikschaum entsprechende Scheiben aus Kunststoffschaum gegebenenfalls nach Anbringung der Kanäle ohne Trennschicht aufeinander laminiert und dann gemeinsam durch Tränken mit Keramikschlicker, Auspressen, Trocknen und Brennen keramisiert werden.

Fig. 1

Fig. 2

EP 0 501 138 A1

Fig.4

5

6

Fig.3

6    5    6    6

1

2

2a

2

4    3    4    4

Fig.5

4

3

4

4

6

Fig. 6

**Europäisches Patentamt**

# EUROPÄISCHER RECHERCHENBERICHT

Nummer der Anmeldung

EP    92 10 1046

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 441 899 (SHIGERU TAGAKI ET AL.) <br> * das ganze Dokument * <br> --- | 1,7 | B01D46/10 <br> B01D46/24 <br> F01N3/02 |
| X | US-A-4 512 786 (SHIGERU SAKURAI ET AL.) <br> * das ganze Dokument * <br> --- | 1,7 | |
| X | EP-A-0 237 824 (FEV MOTORENTECHNIK GMBH & CO) <br> * das ganze Dokument * <br> --- | 1,7 | |
| A | WO-A-8 807 403 (SCHWEIZERISCHE ALUMINIUM AG.) <br> * Seite 11 - Seite 11; Ansprüche 1-4 * <br> ----- | 11,12 | |

RECHERCHIERTE SACHGEBIETE (Int. Cl.5)

B01D
F01N

Der vorliegende Recherchenbericht wurde für alle Patentansprüche erstellt

| Recherchenort | Abschlußdatum der Recherche | Prüfer |
|---|---|---|
| DEN HAAG | 14 MAI 1992 | PYFFEROEN K. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
    Dokument

EPO FORM 1503 03.82 (P0403)